(19) Europäisches Patentamt
European Patent Office
Office européen des brevets

(11) **EP 4 475 227 A1**

(12) **EUROPEAN PATENT APPLICATION**
published in accordance with Art. 153(4) EPC

(43) Date of publication:
**11.12.2024 Bulletin 2024/50**

(21) Application number: **23746721.2**

(22) Date of filing: **16.01.2023**

(51) International Patent Classification (IPC):
***H01M 4/525*** *(2010.01)* ***H01M 4/36*** *(2006.01)*
***H01M 4/505*** *(2010.01)*

(52) Cooperative Patent Classification (CPC):
**H01M 4/36; H01M 4/505; H01M 4/525;** Y02E 60/10

(86) International application number:
**PCT/JP2023/000965**

(87) International publication number:
**WO 2023/145507 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.01.2022 JP 2022013275**

(71) Applicant: **PANASONIC INTELLECTUAL PROPERTY MANAGEMENT CO., LTD.**
**Kadoma-shi**
**Osaka 571-0057 (JP)**

(72) Inventors:
- **JITO, Daizo**
  **Kadoma-shi, Osaka 571-0057 (JP)**
- **KAWAKITA, Akihiro**
  **Kadoma-shi, Osaka 571-0057 (JP)**
- **DEGUCHI, Masaki**
  **Kadoma-shi, Osaka 571-0057 (JP)**
- **INOUE, Katsuya**
  **Kadoma-shi, Osaka 571-0057 (JP)**
- **OGASAWARA, Takeshi**
  **Kadoma-shi, Osaka 571-0057 (JP)**

(74) Representative: **Novagraaf International SA**
**Chemin de l'Echo 3**
**1213 Onex, Geneva (CH)**

(54) **POSITIVE ELECTRODE ACTIVE MATERIAL FOR NONAQUEOUS ELECTROLYTE SECONDARY BATTERIES, AND NONAQUEOUS ELECTROLYTE SECONDARY BATTERY**

(57) Provided are: a nonaqueous electrolyte secondary battery which is high capacity, and exhibits improved initial charge/discharge efficiency and charge/discharge cycle properties; and a positive electrode active material to be used in the nonaqueous electrolyte secondary battery. A positive electrode active material which is to be included in this nonaqueous electrolyte secondary battery and contains a lithium-containing complex oxide having a prescribed composition which has a layered evaporitic structure, wherein: the lithium-containing complex oxide contains secondary particles formed by clumping primary particles with one another; and a sulfonic acid compound represented by general formula I, one or more types of element selected from Ca and Sr, and one or more types of element selected from W, Mo, Ti, Si, Nb and Zr are present on the surface of the secondary particles or at the interface between the primary particles. (In the formula, A is a Group 1 element or a Group 2 element, R is a hydrocarbon group, and n is 1 or 2.)

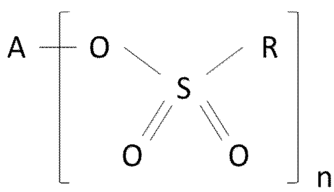
(I)

EP 4 475 227 A1

# Figure 1

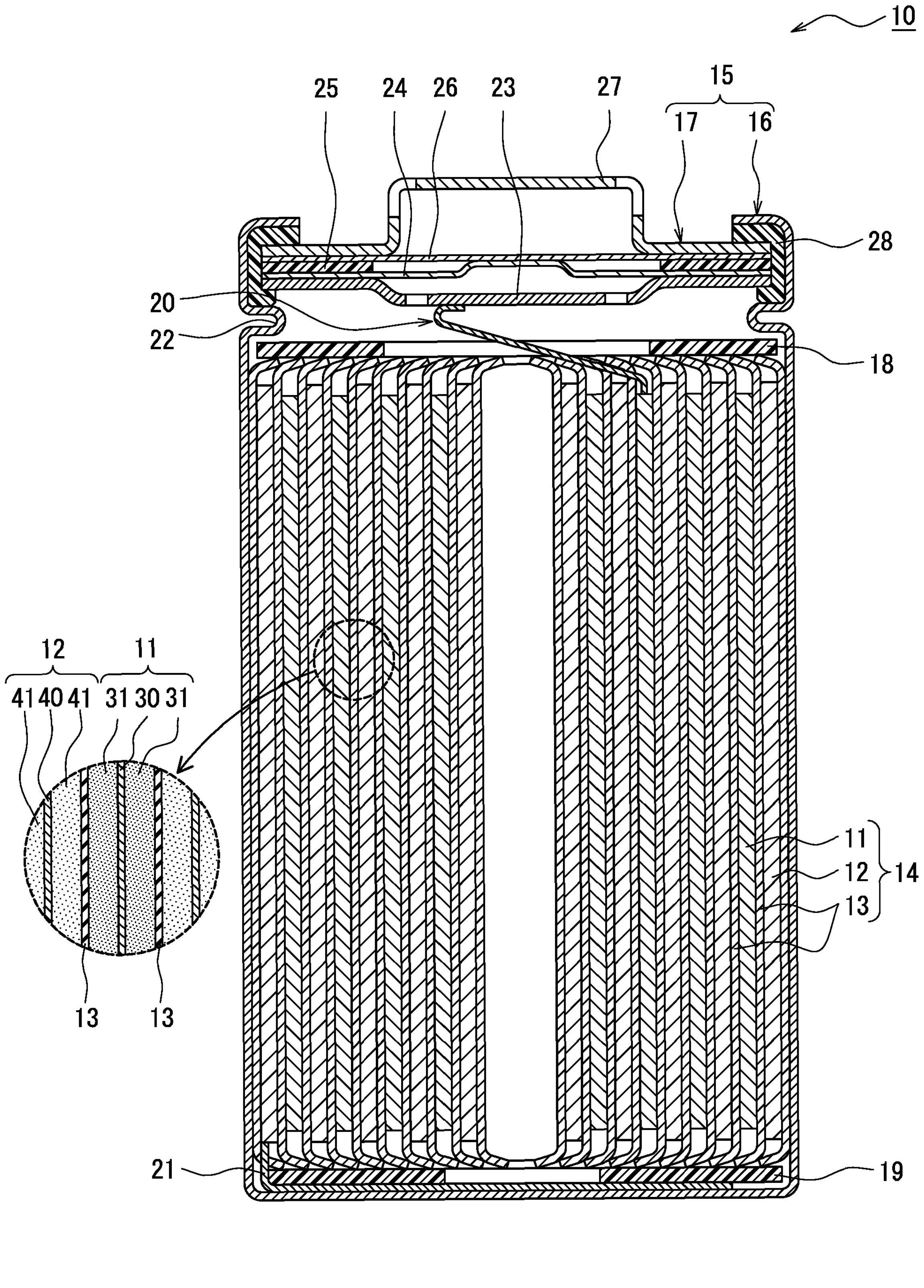
10
25
24
26
23
27
15
17
16
28
20
22
18
12
11
41 40 41
31 30 31
13
13
11
12
13
14
21
19

## Description

TECHNICAL FIELD

The present disclosure relates to a positive electrode active material for a nonaqueous electrolyte secondary battery and a non-aqueous electrolyte secondary battery.

BACKGROUND ART

In recent years, non-aqueous electrolyte secondary batteries have been widely used as a power source for an electric vehicle, a power storage device for utilizing natural energy, and the like. Characteristics required for a positive electrode active material used for the non-aqueous electrolyte secondary battery have also varied depending on the use. For example, Patent Literature 1 discloses a positive electrode active material in which a lithium sulfonate salt compound adheres to a surface of lithium titanate, and describes that this positive electrode active material has excellent storage characteristics at high temperature.

CITATION LIST

PATENT LITERATURE

PATENT LITERATURE 1: Japanese Unexamined Patent Application Publication No. 2018-6164

SUMMARY

Lithium nickelate ($LiNiO_2$) is known to have a high energy density, and by partially replacing Ni with Co, Al, Mn, or the like, characteristics such as reliability can be improved. However, a secondary battery using a lithium-containing composite oxide containing Ni as a main component may have reduced initial charge-discharge efficiency or may have reduced battery capacity due to charge and discharge. The art in Patent Literature 1 does not consider the battery having a high capacity, improved initial charge-discharge efficiency, and improved charge-discharge cycle characteristics, and still has room for improvement.
It is an advantage of the present disclosure to provide a non-aqueous electrolyte secondary battery having a high capacity, improved initial charge-discharge efficiency, and improved charge-discharge cycle characteristics, and a positive electrode active material used for this non-aqueous electrolyte secondary battery.
A positive electrode active material for a non-aqueous electrolyte secondary battery of an aspect of the present disclosure includes a lithium-containing composite oxide having a layered rock-salt structure and represented by the general formula $Li_xNi_aCo_bMn_cM1_dO_{2-y}$, wherein $0.95 \leq x \leq 1.05$, $0.75 \leq a \leq 0.95$, $0 \leq b \leq 0.15$, $0 \leq c \leq 0.25$, $0 \leq d \leq 0.10$, $0 \leq y < 0.05$, $a+b+c+d=1$, and M1 represents at least one element selected from the group consisting of W, Mg, Mo, Nb, Ti, Si, Al, and Zr, wherein the lithium-containing composite oxide includes secondary particles each formed by aggregation of primary particles, and on surfaces of the secondary particles or on interfaces between the primary particles, a sulfonate compound represented by the general formula I, at least one element selected from the group consisting of Ca and Sr, and at least one element selected from the group consisting of W, Mo, Ti, Si, Nb, and Zr, are present,

[Formula 1]

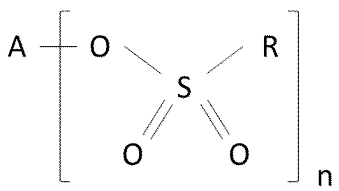

(I)

wherein A represents a group I element or a group II element, R represents a hydrocarbon group, and "n" represents 1 or 2.
A non-aqueous electrolyte secondary battery of an aspect of the present disclosure comprises: a positive electrode including the above positive electrode active material; a negative electrode; and a non-aqueous electrolyte.
According to the positive electrode active material for a non-aqueous electrolyte secondary battery of an aspect of the present disclosure, the non-aqueous electrolyte secondary battery having a high capacity, improved initial charge-discharge efficiency, and improved charge-discharge cycle characteristics can be provided.

BRIEF DESCRIPTION OF DRAWING

FIG. 1 is a vertical sectional view of a non-aqueous electrolyte secondary battery of an example of an embodiment.

DESCRIPTION OF EMBODIMENTS

A layered rock-salt structure of a lithium-containing composite oxide includes a layer of transition metal such as Ni, a Li layer, and an oxygen layer, and by the Li layer reversibly intercalating and deintercalating Li ions present therein, charge-discharge reactions of a battery proceed. It is commonly known that a lithium-nickelate-based lithium-containing composite oxide containing Ni as a main component is a positive electrode active material having a high capacity, and a content rate of Ni in the lithium-containing composite oxide is preferably greater than or equal to 75 mol% relative to a total number of moles of metal elements excluding Li. In addition to Ni, the lithium-containing composite oxide may further contain, relative to the total number of moles of the metal elements excluding Li, greater than or equal to 0 mol% and less than or equal to 15 mol% of Co, greater than or equal to 0 mol% and less than or equal to 25 mol% of Mn, and greater than or equal to 0 mol% and less than or equal to 10 mol% of M1 (M1 represents at least one element selected from the group consisting of W, Mg, Mo, Nb, Ti, Si, Al, and Zr). However, the secondary battery using such a lithium-containing composite oxide may have reduced initial charge-discharge efficiency, and may have reduced battery capacity due to a charge-discharge cycle.

Accordingly, the present inventors have made intensive investigation to solve the above problem, and consequently found that the initial charge-discharge efficiency and the charge-discharge cycle characteristics are improved by adhering a sulfonate compound represented by the general formula I to surfaces of secondary particles of a lithium-containing composite oxide, further setting at least one element selected from the group consisting of Ca and Sr and at least one element selected from the group consisting of W, Mo, Ti, Si, Nb, and Zr to be present on interfaces between primary particles of the lithium-containing composite oxide.

[Formula 2]

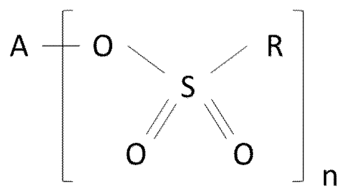

(I)

In the formula, A represents a group I element or a group II element, R represents a hydrocarbon group, and "n" represents 1 or 2.

Hereinafter, an example of an embodiment of the non-aqueous electrolyte secondary battery according to the present disclosure will be described in detail. Hereinafter, a cylindrical battery in which a wound electrode assembly is housed in a cylindrical exterior will be exemplified, but the electrode assembly is not limited to the wound electrode assembly, and may be a stacked electrode assembly in which a plurality of positive electrodes and a plurality of negative electrodes are alternately stacked one by one via a separator. The exterior is not limited to the cylindrical exterior, and may be, for example, a rectangular exterior, a coin-shaped exterior, or a battery case composed of a laminated sheet including a metal layer and a resin layer.

FIG. 1 is a vertical sectional view of a non-aqueous electrolyte secondary battery 10 of an example of an embodiment. As exemplified in FIG. 1, the non-aqueous electrolyte secondary battery 10 comprises an electrode assembly 14, a non-aqueous electrolyte (not illustrated), and a battery case 15 housing the electrode assembly 14 and the non-aqueous electrolyte. The electrode assembly 14 has a wound structure in which a positive electrode 11 and a negative electrode 12 are wound via a separator 13. The battery case 15 is composed of a bottomed cylindrical exterior housing can 16 and a sealing assembly 17 sealing an opening of the exterior housing can 16.

The electrode assembly 14 is composed of the band-shaped positive electrode 11, the band-shaped negative electrode 12, two of the band-shaped separators 13, a positive electrode tab 20 bonded to the positive electrode 11, and a negative electrode tab 21 bonded to the negative electrode 12. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). The two separators 13 are formed to be one size larger than at least the positive electrode 11, and disposed to, for example, sandwich the positive electrode 11.

The non-aqueous electrolyte secondary battery 10 comprises insulating plates 18 and 19 disposed on the upper

and lower sides of the electrode assembly 14, respectively. In the example illustrated in FIG. 1, the positive electrode tab 20 attached to the positive electrode 11 extends through a through hole in the insulating plate 18 toward a side of the sealing assembly 17, and the negative electrode tab 21 attached to the negative electrode 12 extends along an outside of the insulating plate 19 toward the bottom side of the exterior housing can 16. The positive electrode tab 20 is connected to a lower surface of a bottom plate 23 of the sealing assembly 17 by welding or the like, and a cap 27 of the sealing assembly 17 electrically connected to the bottom plate 23 becomes a positive electrode terminal. The negative electrode tab 21 is connected to a bottom inner surface of the exterior housing can 16 by welding or the like, and the exterior housing can 16 becomes a negative electrode terminal.

The exterior housing can 16 is, for example, a bottomed cylindrical metallic container. A gasket 28 is provided between the exterior housing can 16 and the sealing assembly 17 to seal the inside space of the battery case 15. The exterior housing can 16 has a grooved portion 22 that is formed by, for example, pressing a side wall thereof from the outside and that supports the sealing assembly 17. The grooved portion 22 is preferably formed in a circular shape along a circumferential direction of the exterior housing can 16, and supports the sealing assembly 17 with the upper surface thereof.

The sealing assembly 17 has a structure having the bottom plate 23, a lower vent member 24, an insulating member 25, an upper vent member 26, and the cap 27, which are stacked in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected to each other at respective central parts thereof, and the insulating member 25 is interposed between the respective circumferential parts thereof. If the internal pressure of the battery increases due to abnormal heat generation, the lower vent member 24 is deformed so as to push the upper vent member 26 toward the cap 27 side and breaks, resulting in cutting off of an electrical pathway between the lower vent member 24 and the upper vent member 26. If the internal pressure further increases, the upper vent member 26 breaks, and gas is discharged through the opening of the cap 27.

Hereinafter, the positive electrode 11, the negative electrode 12, the separator 13, and the non-aqueous electrolyte, which constitute the non-aqueous electrolyte secondary battery 10, particularly a positive electrode active material included in a positive electrode mixture layer 31 constituting the positive electrode 11, will be described in detail.

[Positive Electrode]

The positive electrode 11 has a positive electrode current collector 30 and the positive electrode mixture layer 31 formed on a surface of the positive electrode current collector 30. The positive electrode mixture layer 31 is preferably formed on both surfaces of the positive electrode current collector 30. For the positive electrode current collector 30, a foil of a metal stable within a potential range of the positive electrode 11, such as aluminum and an aluminum alloy, a film in which such a metal is disposed on a surface layer thereof, and the like may be used. The positive electrode mixture layer 31 may include the positive electrode active material, a conductive agent, and a binder. A thickness of the positive electrode mixture layer 31 is, for example, greater than or equal to 10 μm and less than or equal to 150 μm on one side of the positive electrode current collector 30. The positive electrode 11 may be produced by, for example, applying a positive electrode slurry including the positive electrode active material, the conductive agent, the binder, and the like on the surface of the positive electrode current collector 30, and drying and subsequently compressing the coating film to form the positive electrode mixture layer 31 on both surfaces of the positive electrode current collector 30.

Examples of the conductive agent included in the positive electrode mixture layer 31 may include a carbon-based material such as carbon black (CB), acetylene black (AB), Ketjenblack, carbon nanotube (CNT), graphite, and graphite. These may be used singly, or may be used in combination of two or more thereof.

Examples of the binder included in the positive electrode mixture layer 31 include a fluororesin such as polytetrafluoroethylene (PTFE) and polyvinylidene fluoride (PVdF), polyacrylonitrile (PAN), a polyimide resin, an acrylic resin, and a polyolefin resin. These may be used singly, or may be used in combination of two or more thereof.

The positive electrode active material included in the positive electrode mixture layer 31 includes a lithium-containing composite oxide. The lithium-containing composite oxide includes secondary particles each formed by aggregation of primary particles. A particle diameter of the primary particles constituting the secondary particles of the lithium-containing composite oxide is, for example, greater than or equal to 0.02 μm and less than or equal to 2 μm. The particle diameter of the primary particles is measured as a diameter of a circumscribed circle in a particle image observed with a scanning electron microscope (SEM). An average particle diameter of the secondary particles of the lithium-containing composite oxide is, for example, greater than or equal to 2 μm and less than or equal to 30 μm. Here, the average particle diameter means a median diameter (D50) on a volumetric basis. The D50 means a particle diameter at which a cumulative frequency is 50% from a smaller particle diameter side in a particle size distribution on a volumetric basis. The particle size distribution of the secondary particles of the lithium-containing composite oxide can be measured by using a laser diffraction-type particle size distribution measuring device (for example, MT3000II, manufactured by

MicrotracBEL Corp.) with water as a dispersion medium.

The lithium-containing composite oxide has a layered rock-salt structure. Examples of the layered rock-salt structure of the lithium-containing composite oxide include a layered rock-salt structure belonging to the space group R-3m and a layered rock-salt structure belonging to the space group C2/m. The lithium-containing composite oxide preferably has the layered rock-salt structure belonging to the space group R-3m from the viewpoints of increase in the capacity and stability of the crystal structure. The layered rock-salt structure of the lithium-containing composite oxide may include a layer of transition metal, a Li layer, and an oxygen layer.

The lithium-containing composite oxide is represented by the general formula $Li_xNi_aCo_bMn_cM1_dO_{2-y}$, wherein $0.95 \leq x \leq 1.05$, $0.75 \leq a \leq 0.95$, $0 \leq b \leq 0.15$, $0 \leq c \leq 0.25$, $0 \leq d \leq 0.10$, $0 \leq y < 0.05$, $a+b+c+d=1$, and M1 represents at least one element selected from the group consisting of W, Mg, Mo, Nb, Ti, Si, Al, and Zr. Content rates of the metal elements contained in the lithium-containing composite oxide are measured by, for example, inductively coupled plasma (ICP) atomic emission spectrometry.

Setting a content rate of Ni in the lithium-containing composite oxide to be greater than or equal to 75 mol% and less than or equal to 95 mol% yields the battery having a high capacity. A larger content rate of Ni yields the battery having a higher capacity.

A content rate of Co in the lithium-containing composite oxide is greater than or equal to 0 mol% and less than or equal to 15 mol%, and Co is an optional component. In other words, the lithium-containing composite oxide may not contain Co. The lithium-containing composite oxide containing Co can improve heat resistance of the battery.

A content rate of Mn in the lithium-containing composite oxide is greater than or equal to 0 mol% and less than or equal to 25 mol%, and Mn is an optional component. In other words, the lithium-containing composite oxide may not contain Mn. The lithium-containing composite oxide containing Mn can stabilize the crystal structure.

A content rate of M1 (M1 represents at least one element selected from the group consisting of W, Mg, Mo, Nb, Ti, Si, Al, and Zr) in the lithium-containing composite oxide is greater than or equal to 0 mol% and less than or equal to 10 mol%, and M1 is an optional component. In other words, the lithium-containing composite oxide may not contain M1.

On surfaces of the secondary particles or on interfaces between the primary particles of the lithium-containing composite oxide, a sulfonate compound represented by the general formula I is present. This improves the initial charge-discharge efficiency of the battery.

[Formula 3]

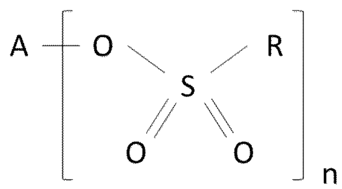

(I)

In the formula, A represents a group I element or a group II element, R represents a hydrocarbon group, and "n" represents 1 or 2.

In the general formula I, A preferably represents a group I element, and more preferably represents Li. This can further improve the initial charge-discharge efficiency. When A represents a group I element, n=1.

In the general formula I, R preferably represents an alkyl group. R more preferably represents an alkyl group having less than or equal to 5 carbon atoms, further preferably represents an alkyl group having less than or equal to 3 carbon atoms, and particularly preferably represents a methyl group. Some of hydrogen bonded to carbon in R may be replaced with fluorine. Note that, not all hydrogen bonded to carbon in R are replaced with fluorine. A smaller molecular weight of R can further reduce reaction resistance.

Examples of the sulfonate compound include lithium methanesulfonate, lithium ethanesulfonate, lithium propanesulfonate, sodium methanesulfonate, magnesium methanesulfonate, and lithium fluoromethanesulfonate.

An amount of the sulfonate compound present on the surface of the lithium-containing composite oxide is preferably greater than or equal to 0.1 mass% and less than or equal to 1 mass%, and more preferably greater than or equal to 0.3 mass% and less than or equal to 0.8 mass% relative to a mass of the lithium-containing composite oxide.

The presence of the sulfonate compound on the surface of the lithium-containing composite oxide can be confirmed by Fourier transformation infrared spectrometry (FT-IR). In an infrared absorption spectrum obtained by FT-IR, the positive electrode active material may have an absorption peak at least greater than or equal to one of positions near 1238 $cm^{-1}$, 1175 $cm^{-1}$, 1065 $cm^{-1}$, and 785 $cm^{-1}$.

In the infrared absorption spectrum obtained by FT-IR, for example, the positive electrode active material including lithium methanesulfonate has absorption peaks near 1238 $cm^{-1}$, 1175 $cm^{-1}$, 1065 $cm^{-1}$, and 785 $cm^{-1}$. The peaks near 1238 $cm^{-1}$, 1175 $cm^{-1}$, and 1065 $cm^{-1}$ are absorption peaks attributed to an SO stretching vibration derived from

lithium methanesulfonate. The peak near 785 $cm^{-1}$ is an absorption peak attributed to a CS stretching vibration derived from lithium methanesulfonate.

In the positive electrode active material including a sulfonate compound other than lithium methanesulfonate, the absorption peak derived from the sulfonate compound included in the positive electrode active material can be identified similarly to the positive electrode active material including lithium methanesulfonate. The presence of the sulfonate compound on the surface of the lithium-containing composite oxide can also be confirmed by ICP, atomic absorption, X-ray photoelectron spectrometry (XPS), radiation XRD measurement, TOF-SIMS, and the like.

An average particle diameter of the sulfonate compound is preferably less than or equal to 10 μm, more preferably less than or equal to 5 μm, and further preferably less than or equal to 3 μm. By setting the average particle diameter of the sulfonate compound to preferably less than or equal to 10 μm, more preferably less than or equal to 5 μm, and further preferably less than or equal to 3 μm, the sulfonate compound can adhere to an entirety of the positive electrode active material powder more uniformly, and the effect by the sulfonate compound can be exhibited more remarkably. A lower limit of the average particle diameter of the sulfonate compound is, for example, 0.1 μm. Here, the average particle diameter of the sulfonate compound can be determined by observing the sulfonate compound adhering to the surface of the lithium-containing composite oxide with an SEM. Specifically, outer shapes of randomly selected 50 particles are specified, and a major diameter (the longest diameter) of each of the 50 particles is determined to specify an average value thereof as the average particle diameter of the sulfonate compound.

On surfaces of the secondary particles or on interfaces between the primary particles of the lithium-containing composite oxide, at least one element selected from the group consisting of Ca and Sr (hereinafter, referred to as "M2"), and at least one element selected from the group consisting of W, Mo, Ti, Si, Nb, and Zr (hereinafter, referred to as "M3"), are present. This effectively inhibits erosion and deterioration of the lithium-containing composite oxide, resulting in improved charge-discharge cycle characteristics of the battery.

A total amount of Ca and Sr on the surfaces of the secondary particles or on the interfaces between the primary particles of the lithium-containing composite oxide is preferably less than or equal to 2 mol%, more preferably less than or equal to 1 mol%, and further preferably less than or equal to 0.5 mol% relative to a total amount of moles of metal elements in the lithium-containing composite oxide excluding Li. A lower limit of the total amount of Ca and Sr is, for example, 0.01 mol%.

A total amount of W, Mo, Ti, Si, Nb, and Zr on the surfaces of the secondary particles or on the interfaces between the primary particles of the lithium-containing composite oxide is preferably less than or equal to 2 mol%, more preferably less than or equal to 1 mol%, and further preferably less than or equal to 0.5 mol% relative to a total amount of moles of metal elements in the lithium-containing composite oxide excluding Li. A lower limit of the total amount of W, Mo, Ti, Si, Nb, and Zr is, for example, 0.01 mol%.

On the surfaces of the secondary particles or on the interfaces between the primary particles of the lithium-containing composite oxide, a compound containing M2 (hereinafter, referred to as "M2 compound") and a compound containing M3 (hereinafter, referred to as "M3 compound") may each be stuck. Examples of the M2 compound include an oxide, hydroxide, carbonate salt, and the like that contain M2. Examples of the M3 compound include an oxide, hydroxide, carbonate salt, sulfate salt, and the like that contain M3.

On the surfaces of the secondary particles or on the interfaces between the primary particles of the lithium-containing composite oxide, a compound represented by the general formula $M2_{\alpha}M3_{\beta}O_{\gamma}$, wherein $1\leq\alpha\leq2$, $1\leq\beta\leq5$, $4\leq\gamma\leq9$, M2 represents at least one element selected from the group consisting of Ca and Sr, and M3 represents at least one element selected from the group consisting of W, Mo, Ti, Si, Nb, and Zr, (hereinafter, referred to as "$M2_{\alpha}M3_{\beta}O_{\gamma}$ compound") may be stuck. On the surfaces of the secondary particles or on the interfaces between the primary particles of the lithium-containing composite oxide, the M2 compound, the M3 compound, and the $M2_{\alpha}M3_{\beta}O_{\gamma}$ compound may be present together.

The presence of the $M2_{\alpha}M3_{\beta}O_{\gamma}$ compound may be confirmed by measuring a cross section of the secondary particles of the lithium-containing composite oxide using transmission microscope - energy dispersive X-ray spectrometry (TEM-EDX). For example, the $M2_{\alpha}M3_{\beta}O_{\gamma}$ compound may be scatteringly present on the surfaces of the primary particles and secondary particles of the lithium-containing composite oxide, or may be present as a layer for widely covering the surfaces of the primary particles and secondary particles. That is, the $M2_{\alpha}M3_{\beta}O_{\gamma}$ compound is widely present on the surfaces of the primary particles inside the secondary particles or on the surfaces of the secondary particles. For example, the secondary particle of the composite oxide (Z) is formed by aggregation of greater than or equal to five primary particles, and a surface area of the primary particles is larger inside the secondary particle than on the surface of the secondary particle. The $M2_{\alpha}M3_{\beta}O_{\gamma}$ compound is included, for example, at a larger amount inside the secondary particles than on the surfaces of the secondary particles.

Specific examples of the $M2_{\alpha}M3_{\beta}O_{\gamma}$ compound include $CaWO_4$, $CaMoO_3$, $CaMoO_4$, $CaTiO_3$, $Ca_2TiO_4$, $CaSiO_3$, $Ca_2SiO_4$, $CaNbO_3$, $CaNb_2O_6$, $CaZrO_3$, $CaZr_4O_9$, $SrWO_4$, $SrMoO_3$, $SrMoO_4$, $SrTiO_3$, $Sr_2TiO_4$, $SrSiO_3$, $Sr_2SiO_4$, $SrNbO_3$, $SrNb_2O_6$, $SrZrO_3$, and $SrZr_4O_9$.

As for the positive electrode active material, when a filtrate of a water dispersion in which 1 g of the positive

electrode active material is dispersed in 70 ml of pure water is titrated with hydrochloric acid, a value of Y-X is preferably less than or equal to 130 μmol/g, more preferably less than or equal to 100 μmol/g, and further preferably less than or equal to 60 μmol/g, wherein an amount of the consumed acid until a first inflection point on the pH curve is represented by X mol/g, and an amount of the consumed acid until a second inflection point is represented by Y mol/g. A value of X-(Y-X) is preferably less than or equal to 130 μmol/g, more preferably less than or equal to 100 μmol/g, and further preferably less than or equal to 60 μmol/g. That is, the positive electrode active material may include a slight amount of a water-soluble alkaline component titrated with an acid. When the amount of the alkaline component included in the positive electrode active material is small, stability of the slurry is improved, leading to improved productivity.

The positive electrode active material includes the alkaline component only at an amount corresponding to the aforementioned amount of the consumed acid. Examples of the alkaline component include lithium hydroxide (LiOH) and lithium carbonate ($Li_2CO_3$). Inside the particles of the composite oxide, lithium carbonate and lithium hydroxide may be present on the interfaces of the primary particles and on the surfaces of the secondary particles each formed by aggregation of the primary particles. These are preferably uniformly present without uneven presence on a part of the surfaces of the primary particles.

A specific quantification method of the water-soluble alkaline component extracted from the positive electrode active material is as follows. The following titration method is commonly called "Warder method".

(1) To 30 ml of pure water, 1 g of the positive electrode active material is added, and the mixture is stirred to prepare a suspension in which the active material is dispersed in water.
(2) The suspension is filtered and filled up to 70 ml by adding pure water to obtain a filtrate including the water-soluble alkaline component eluted from the active material.
(3) To the filtrate, hydrochloric acid is gradually added dropwise while measuring a pH of the filtrate to determine the amount of hydrochloric acid (titration amount) X mol/g consumed until the first inflection point (near pH 8) on the pH curve and the amount of hydrochloric acid Y mol/g consumed until the second inflection point (near pH 4). The inflection point is a peak position of a differential value relative to the titration amount.

The positive electrode mixture layer 31 may include another positive electrode active material in addition to the positive electrode active material of the aforementioned present embodiment. Examples of the other positive electrode active material include a lithium-containing composite oxide with a content rate of Ni of greater than or equal to 0 mol% and less than 75 mol%.

Next, an example of a method for manufacturing the positive electrode active material according to the present embodiment will be described.

The manufacturing process of the positive electrode active material includes: a first step of mixing the composite oxide and a Li compound to obtain a mixture; a second step of calcining the mixture; and a third step of washing the calcined product with water and heating and drying the calcined product. By adding an M2 raw material including M2 (at least one element selected from the group consisting of Ca and Sr) and an M3 raw material including M3 (at least one element selected from the group consisting of W, Mo, Ti, Si, Nb, and Zr) in the manufacturing process of the positive electrode active material, M2 and M3 can be present on the surfaces of the secondary particles or the interfaces between the primary particles of the lithium-containing composite oxide. The compounds containing M2 and M3 are added in the second step or the third step, and preferably added in the second step. By adding at least one of the sulfonate compound and a sulfonic acid solution in the third step, the sulfonate compound can be present on the surfaces of the secondary particles or the interfaces between the primary particles of the lithium-containing composite oxide.

In the first step, for example, metal oxides containing greater than or equal to 75 mol% and less than or equal to 95 mol% of Ni, greater than or equal to 0 mol% and less than or equal to 15 mol% of Co, greater than or equal to 0 mol% and less than or equal to 25 mol% of Mn, and greater than or equal to 0 mol% and less than or equal to 10 mol% of M1 (M1 represents at least one element selected from the group consisting of W, Mo, Ti, Si, Nb, and Zr); the Li compound; the M2 raw material; and the M3 raw material are mixed to obtain the mixture.

The metal oxide can be obtained by, for example, while stirring a solution of metal salts including Ni and the optional metal elements (such as Co and Mn), a solution of an alkali such as sodium hydroxide is added dropwise to adjust a pH on the alkaline side (for example, greater than or equal to 8.5 and less than or equal to 12.5) to precipitate (coprecipitate) a composite hydroxide including Ni and the optional metal elements, and thermally treating this composite hydroxide. The thermal treatment temperature is not particularly limited, and may be, for example, within a range of greater than or equal to 300°C and less than or equal to 600°C.

Examples of the Li compound include $Li_2CO_3$, LiOH, $Li_2O_2$, $Li_2O$, $LiNO_3$, $LiNO_2$, $Li_2SO_4$, $LiOH \cdot H_2O$, LiH, and LiF. A mixing ratio between the metal oxide and the Li compound is preferably set so that, for example, a mole ratio between a total amount of the metal elements in the metal oxide and Li is within a range of greater than or equal to 1:0.98 and less than or equal to 1: 1.1 in terms of facilitation of the aforementioned parameters to be regulated within the aforementioned prescribed range.

An example of the M2 raw material includes $Ca(OH)_2$, CaO, $CaCO_3$, $CaSO_4$, $Ca(NO_3)_2$, $Sr(OH)_2$, $Sr(OH)_2 \cdot 8H_2O$, $Sr(OH)_2 \cdot H_2O$, SrO, $SrCO_3$, $SrSO_4$, and $Sr(NO_3)_2$. To reduce an amount of water generated during the calcination, the M2 raw material may be used after drying and dehydration. These compounds may be crushed or the like to have a particle diameter of greater than or equal to 0.1 μm and less than or equal to 20 μm. Examples of the M3 raw material similarly include a hydroxide, oxide, carbonate salt, sulfate salt, nitride salt, and the like of M3. To reduce an amount of water generated during the calcination, the M3 raw material may be used after drying and dehydration. These compounds may be crushed or the like to have a particle diameter of greater than or equal to 0.1 μm and less than or equal to 20 μm.

The metal oxide and the M2 raw material are preferably mixed at a ratio so that a mole ratio between the total amount of the metal elements in the metal oxide and the M2 element is greater than or equal to 1:0.0001 and less than or equal to 1:0.02. When a plurality of types of the M2 raw material is used, the M2 material is mixed so that the total amount of M2 included in the compound satisfies the above ratio. The preferable mixing ratio with the metal oxide also applies to the M3 raw material.

In the second step, for example, the mixture is calcined under an oxygen atmosphere to obtain the calcined product. The calcining conditions may be a heating rate within greater than or equal to 450°C and less than or equal to 680°C being within a range of greater than 0.1 °C/min and less than or equal to 5.5 °C/min, and a highest reaching temperature being within a range of greater than or equal to 700°C and less than or equal to 980°C. A heating rate from greater than 680°C to the highest reaching temperature may be, for example, greater than or equal to 0.1 °C/min and less than or equal to 3.5 °C/min. A holding time at the highest reaching temperature may be greater than or equal to 1 hour and less than or equal to 10 hours. The calcining step may be a multi-step calcination, and a plurality of the first heating rates and the second heating rates may be set in each temperature region as long as the first heating rates and the second heating rates are within the above determined ranges.

In the third step, the calcined product is washed with water to remove an impurity, and the water-washed calcined product is heated and dried. When the M2 raw material and the M3 raw material are not added in the second step, for example, the M2 raw material and the M3 raw material are added to the water-washed calcined product and mixed. Although the calcined product after the water washing may be dried at a temperature less than 100°C, when M2 and M3 are added in the third step, the mixture of the M2 raw material, the M3 raw material, and the calcined product is preferably heated to a temperature of greater than or equal to 100°C. In this case, an example of the preferable temperature range is greater than or equal to 150°C and less than or equal to 250°C. The drying treatment may be performed under any of vacuum and atmosphere. An example of the drying treatment time is greater than or equal to 1 hour and less than or equal to 5 hours.

In the third step, at least one of the sulfonate compound and the sulfonic acid solution is added to a cake-like composition obtained after the water washing or to a powder composition obtained after the drying. This may adhere the sulfonate compound to the surface of the lithium-containing composite oxide. The at least one of the sulfonate compound and the sulfonic acid solution is preferably added to the cake-like composition. The shape of the sulfonate compound may be any of powder or solution. The sulfonic acid solution is, for example, a methanesulfonic acid solution in which methanesulfonic acid is dissolved in water. The Li compound remains in the cake-like composition, and this remained Li compound is dissolved in water contained in the cake-like composition. Thus, also when the sulfonic acid solution is added, the sulfonate compound including Li is formed. In addition to the sulfonic acid solution, the Li compound may be added to the cake-like composition. The Li compound is, for example, LiOH. Amounts of the Li compound and the sulfonic acid solution added to the cake-like composition preferably satisfy a relationship of $0 \leq$ Li compound / sulfonic acid $\leq 1.3$ at a mole ratio. The amount of the sulfonate compound or sulfonic acid added is preferably greater than or equal to 0.1 mass% and less than or equal to 1 mass%, and more preferably greater than or equal to 0.3 mass% and less than or equal to 0.8 mass% relative to the mass of the lithium-containing composite oxide. A concentration of each of the sulfonic acid solution and the sulfonate compound solution is, for example, greater than or equal to 0.5 mass% and less than or equal to 40 mass%.

[Negative Electrode]

The negative electrode 12 has a negative electrode current collector 40 and a negative electrode mixture layer 41 formed on a surface of the negative electrode current collector 40. The negative electrode mixture layer 41 is preferably formed on both surfaces of the negative electrode current collector 40. For the negative electrode current collector 40, a foil of a metal stable within a potential range of the negative electrode 12, such as copper and a copper alloy, a film in which such a metal is disposed on a surface layer thereof, and the like may be used. The negative electrode mixture layer 41 may include a negative electrode active material and a binder. A thickness of the negative electrode mixture layer 41 is, for example, greater than or equal to 10 μm and less than or equal to 150 μm on one side of the negative electrode current collector 40. The negative electrode 12 can be produced by, for example, applying a negative electrode slurry including the negative electrode active material, the binder, and the like on the surface of the negative electrode current collector 40, and

drying and subsequently compressing the coating film to form the negative electrode mixture layer 41 on both surfaces of the negative electrode current collector 40.

The negative electrode active material included in the negative electrode mixture layer 41 is not particularly limited as long as it can reversibly occlude and release lithium ions, and carbon materials such as graphite are typically used. The graphite may be any of natural graphite such as flake graphite, massive graphite, and amorphous graphite, and artificial graphite such as massive artificial graphite and graphitized mesophase carbon microbead. As the negative electrode active material, a metal that forms an alloy with Li, such as Si and Sn, a metal compound including Si, Sn, and the like, a lithium-titanium composite oxide, and the like may also be used. In addition, those in which a carbon coating is provided on these materials may also be used. For example, a Si-containing compound represented by $SiO_x$ ($0.5 \leq x \leq 1.6$), a Si-containing compound in which Si fine particles are dispersed in a lithium silicate phase represented by $Li_{2y}SiO_{(2+y)}$ ($0<y<2$), or the like may be used in combination with the graphite.

Example of the binder included in the negative electrode mixture layer 41 include styrene-butadiene rubber (SBR), nitrile-butadiene rubber (NBR), carboxymethylcellulose (CMC) or a salt thereof, polyacrylic acid (PAA) or a salt thereof (which may be PAA-Na, PAA-K, and the like, or a partially neutralized salt), and polyvinyl alcohol (PVA). These may be used singly, or may be used in combination of two or more thereof.

[Separator]

For the separator 13, a porous sheet having an ion permeation property and an insulation property is used, for example. Specific examples of the porous sheet include a fine porous thin film, a woven fabric, and a nonwoven fabric. As a material for the separator, a polyolefin such as polyethylene or polypropylene, cellulose, or the like is preferable. The separator 13 may have a single-layer structure or a multi-layer structure. On a surface of the separator 13, a resin layer having high heat resistance, such as an aramid resin, and a filler layer including a filler of an inorganic compound may be provided.

[Non-Aqueous Electrolyte]

The non-aqueous electrolyte includes, for example, a non-aqueous solvent and an electrolyte salt dissolved in the non-aqueous solvent. For the non-aqueous solvent, esters, ethers, nitriles such as acetonitrile, amides such as dimethylformamide, a mixed solvent of two or more thereof, or the like may be used, for example. The non-aqueous solvents may contain a halogen-substituted derivative in which the hydrogen atoms of these solvents are at least partially replaced with a halogen atom such as fluorine. Examples of the halogen-substituted derivative include fluorinated cyclic carbonates such as fluoroethylene carbonate (FEC), fluorinated chain carbonates, and fluorinated chain carboxylates such as methyl fluoropropionate (FMP).

Examples of the esters include: cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as γ-butyrolactone (GBL) and γ-valerolactone (GVL); and chain carboxylates such as methyl acetate, ethyl acetate, propyl acetate, methyl propionate (MP), and ethyl propionate (EP).

Examples of the ethers include: cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include $LiBF_4$, $LiClO_4$, $LiPF_6$, $LiAsF_6$, $LiSbF_6$, $LiAlCl_4$, LiSCN, $LiCF_3SO_3$, $LiCF_3CO_2$, $Li(P(C_2O_4)F_4)$, $LiPF_{6-x}(C_nF_{2n+1})_x$ ($1<x<6$, and "n" represents 1 or 2), $LiB_{10}Cl_{10}$, LiCl, LiBr, LiI, lithium chloroborane, a lithium lower aliphatic carboxylate, borate salts such as $Li_2B_4O_7$ and $Li(B(C_2O_4)F_2)$, and imide salts such as $LiN(SO_2CF_3)_2$ and $LiN(C_1F_{2l+1}SO_2)(_{Cm}F_{2m+1}SO_2)$ {"1" and "m" represent integers of greater than or equal to 0}. These lithium salts may be used singly, or a plurality of types thereof may be mixed for use. Among them, $LiPF_6$ is preferably used from the viewpoints of ion conductivity, electrochemical stability, and the like. A concentration of the lithium salt is preferably, for example, greater than or equal to 0.8 mol and less than or equal to 1.8 mol per litter of the non-aqueous solvent. In addition, vinylene carbonate or a propanesultone-type additive may be added.

EXAMPLES

Hereinafter, the present disclosure will be further described with Examples and Comparative Examples, but the present disclosure is not limited to the following Examples.

<Example 1>

[Production of Positive Electrode Active Material]

A composite hydroxide obtained by a coprecipitation method and represented by $[Ni_{0.90}Co_{0.05}Mn_{0.05}](OH)_2$ was calcined at 500°C for 8 hours to obtain a metal oxide ($Ni_{0.90}Co_{0.05}Mn_{0.05}O_2$). Then, lithium hydroxide, the above metal oxide, calcium hydroxide, and tungsten oxide were mixed so that a mole ratio between: Li; a total amount of Ni, Co, and Mn; Ca; and W was 1.03:1:0.0025:0.005 to obtain a mixture (the first step). This mixture was calcined under an oxygen flow (at a flow rate of 2 mL/min per 10 $cm^3$ and 5 L/min per kilogram of the mixture) at an oxygen concentration of 95% from room temperature to 650°C at a heating rate of 2.0°C/min, and then calcined from 650°C to 780°C at a heating rate of 0.5°C/min to obtain a calcined product (the second step). To this calcined product, water was added so that a slurry concentration was 1500 g/L, the mixture was stirred for 15 minutes, and filtered to obtain a cake-like composition. To this cake-like composition, lithium methanesulfonate powder was added. An amount of the lithium methanesulfonate added was 0.1 mass% relative to a total mass of the lithium-containing composite oxide. After the adding step, a drying step was performed under conditions of a vacuum atmosphere at 180°C for 2 hours to obtain a positive electrode active material of Example 1 (the third step).

The obtained positive electrode active material was measured with an ICP atomic emission spectrometer (iCAP6300, manufactured by Thermo Fisher Scientific K.K.), and as a result, elements shown in the following Table 1 were confirmed as elements except for Li, O, and impurity elements. It was confirmed by TEM-EDX that Ca and W were present on interfaces of primary particles inside secondary particles. A compound present in the positive electrode active material was identified by radiation X-ray diffraction measurement to consequently confirm the presence of $CaWO_4$. By Fourier transformation infrared spectrometry (FT-IR), the presence of lithium methanesulfonate on the surface of the positive electrode active material was confirmed. A value of Y-X of the positive electrode active material was 59 μmol/g, and a value of X-(Y-X) was 48 μmol/g.

[Production of Positive Electrode]

Mixing 92 parts by mass of the positive electrode active material, 5 parts by mass of acetylene black as a conductive agent, and 3 parts by mass of polyvinylidene fluoride as a binder was performed at this ratio, and this mixture was mixed with N-methyl-2-pyrrolidone (NMP) to prepare a positive electrode slurry. Then, this slurry was applied on both surfaces of a positive electrode current collector composed of aluminum foil having a thickness of 15 μm, the coating film was dried, and then the coating film was rolled with a roller, and cut to a predetermined electrode size to produce a positive electrode. At a part of the positive electrode, an exposed portion where the surface of the positive electrode current collector was exposed was provided.

[Preparation of Non-Aqueous Electrolyte]

Ethylene carbonate (EC), methyl ethyl carbonate (MEC), and dimethyl carbonate (DMC) were mixed at a volume ratio of 3:3:4. Into this mixed solvent, lithium hexafluorophosphate ($LiPF_6$) was dissolved at a concentration of 1.2 mol/L to prepare a non-aqueous electrolyte.

[Production of Test Cell]

A positive electrode lead was attached to the exposed portion of the positive electrode, and a negative electrode lead was attached to Li metal foil as a negative electrode. The positive electrode and the negative electrode were spirally wound via a separator made of a polyolefin, and then press-formed in a radial direction to produce a flat, wound electrode assembly. This electrode assembly was housed in an exterior composed of an aluminum laminate sheet, the non-aqueous electrolyte liquid was injected thereinto, and then an opening of the exterior was sealed to obtain a test cell.

[Evaluation of Initial Charge-Discharge Efficiency]

Under a temperature environment at 25°C, the test cell was charged at a constant current of 0.2 It until a cell voltage reached 4.3 V (vs Li), and then charged at a constant voltage of 4.3 V (vs Li) until a current value reached 0.01 It.

After 1 hour, the test cell was discharged at a constant current of 0.2 It until the cell voltage reached 2.5 V (vs Li). A charge capacity and discharge capacity in this time were measured to determine initial charge-discharge efficiency of the test cell with the following formula.

$$\text{Initial charge-discharge efficiency} = \text{Discharge capacity} / \text{Charge capacity}$$

[Evaluation of Capacity Retention]

Under an environment at 25°C, the test cell was charged at a constant current of 0.2 It until a battery voltage reached 4.3 V, and then charged at a constant voltage of 4.3 V until a current value reached 0.01 It. Thereafter, the test cell was discharged at a constant current of 0.2 It until the battery voltage reached 2.5 V. This charge and discharge was specified as one cycle, and 30 cycles were performed. A capacity retention of the test cell in the charge-discharge cycle was determined with the following formula.

Capacity retention = (Discharge capacity at 30th cycle / Discharge capacity at 1st cycle) × 100

<Example 2>

A test cell was produced and evaluated in the same manner as in Example 1 except that, in the third step in the production of the positive electrode active material, the amount of the lithium methanesulfonate added relative to the total mass of the lithium-containing composite oxide was 0.3 mass%.

<Example 3>

A test cell was produced and evaluated in the same manner as in Example 1 except that, in the third step in the production of the positive electrode active material, the amount of the lithium methanesulfonate added relative to the total mass of the lithium-containing composite oxide was 0.5 mass%.

<Example 4>

A test cell was produced and evaluated in the same manner as in Example 1 except that, in the third step in the production of the positive electrode active material, the amount of the lithium methanesulfonate added relative to the total mass of the lithium-containing composite oxide was 0.8 mass%.

<Example 5>

A test cell was produced and evaluated in the same manner as in Example 1 except that, in the third step in the production of the positive electrode active material, the amount of the lithium methanesulfonate added relative to the total mass of the lithium-containing composite oxide was 1 mass%.

<Comparative Example 1>

A test cell was produced and evaluated in the same manner as in Example 1 except that, in the third step in the production of the positive electrode active material, lithium methanesulfonate was not added.

<Comparative Example 2>

A test cell was produced and evaluated in the same manner as in Example 1 except that: in the first step in the production of the positive electrode active material, calcium hydroxide and tungsten oxide were not added; and in the third step in the production of the positive electrode active material, the amount of the lithium methanesulfonate added relative to the total mass of the lithium-containing composite oxide was 0.5 mass%.

<Comparative Example 3>

A test cell was produced and evaluated in the same manner as in Example 1 except that: in the first step in the production of the positive electrode active material, calcium hydroxide and tungsten oxide were not added; and in the third step, lithium methanesulfonate was not added.

Table 1 shows the initial charge-discharge efficiency and capacity retention of the test cells of Examples 1 to 5 and Comparative Examples 1 to 3. Table 1 also shows the composition of the lithium-containing composite oxide, the amounts of Ca and W added, and the type and amount of the sulfonate compound added. The initial charge-discharge efficiency and capacity retention of the test cells of Examples 1 to 5 and Comparative Examples 1 and 2 shown in Table 1 are represented relative to the initial charge-discharge efficiency and capacity retention of the test cell of Comparative Example 3 being 100, respectively.

[Table 1]

| | Positive electrode active material | | | | | | | Evaluation results | |
|---|---|---|---|---|---|---|---|---|---|
| | Composition of lithium-containing composite oxide | | | Amount of Ca/W added [mol%] | Sulfonate compound | | | Initial charge-di scharge efficiency | Capacity retention |
| | Ni [mol%] | Co [mol%] | Mn [mol%] | | Added compound | Addition method | Addition amount [mass%] | | |
| Example 1 | 90 | 5 | 5 | 0.25/0.5 | Li methanesulfonate | Powder addition | 0.1 | 100.5 | 102.8 |
| Example 2 | 90 | 5 | 5 | 0.25/0.5 | Li methanesulfonate | Powder addition | 0.3 | 100.9 | 103.2 |
| Example 3 | 90 | 5 | 5 | 0.25/0.5 | Li methanesulfonate | Powder addition | 0.5 | 101.6 | 104.8 |
| Example 4 | 90 | 5 | 5 | 0.25/0.5 | Li methanesulfonate | Powder addition | 0.8 | 101.2 | 104.0 |
| Example 5 | 90 | 5 | 5 | 0.25/0.5 | Li methanesulfonate | Powder addition | 1.0 | 100.7 | 103.5 |
| Comparative Example 1 | 90 | 5 | 5 | 0.25/0.5 | - | - | - | 99.8 | 101.0 |
| Comparative Example 2 | 90 | 5 | 5 | - | Li methanesulfonate | Powder addition | 0.5 | 101.5 | 97.0 |
| Comparative Example 3 | 90 | 5 | 5 | - | - | - | - | 100 | 100 |

In Table 1, the test cells of Examples improved the initial charge-discharge efficiency and the capacity retention compared with the test cell of Comparative Example 3. Meanwhile, the test cell of Comparative Example 1 deteriorated the initial charge-discharge efficiency compared with the test cell of Comparative Example 3. The test cell of Comparative Example 2 deteriorated the capacity retention compared with the test cell of Comparative Example 3. Therefore, it is found that the non-aqueous electrolyte secondary battery having a large capacity and improved initial charge-discharge efficiency and charge-discharge cycle characteristics can be provided by using the positive electrode active material in which the sulfonate compound and the predetermined elements are present on the surface of the lithium-containing composite oxide having the predetermined composition.

<Example 6>

A test cell was produced and evaluated in the same manner as in Example 1 except that, in the third step in the production of the positive electrode active material, a lithium methanesulfonate solution in which lithium methanesulfonate was dissolved in pure water was added instead of the lithium methanesulfonate powder, and the amount of the lithium methanesulfonate added relative to the total mass of the lithium-containing composite oxide was 0.5 mass%. A concentration of the lithium methanesulfonate solution added was 10 mass%, and the lithium methanesulfonate solution was added so that the amount of the lithium methanesulfonate added was as above. By Fourier transformation infrared spectrometry (FT-IR), the presence of lithium methanesulfonate on the surface of the positive electrode active material was confirmed.

<Example 7>

A test cell was produced and evaluated in the same manner as in Example 1 except that, in the third step in the production of the positive electrode active material, a methanesulfonic acid solution was added instead of the lithium methanesulfonate powder, and the amount of the methanesulfonic acid added relative to the total mass of the lithium-containing composite oxide was 0.48 mass%. A concentration of the methanesulfonic acid solution added was 10 mass%, and the methanesulfonic acid solution was added so that the amount of the methanesulfonic acid added was as above. By Fourier transformation infrared spectrometry (FT-IR), the presence of lithium methanesulfonate on the surface of the positive electrode active material was confirmed.

<Example 8>

A test cell was produced and evaluated in the same manner as in Example 6 except that, in the third step in the production of the positive electrode active material, a solution including methanesulfonic acid and LiOH dissolved in pure water at a mole ratio between methanesulfonic acid and LiOH of 1:0.5 (hereinafter, "methanesulfonic acid + LiOH solution") was added instead of the lithium methanesulfonate solution, and the amount of the lithium methanesulfonate added relative to the total mass of the lithium-containing composite oxide was 0.49 mass%. A concentration of the methanesulfonic acid + LiOH solution added was 10 mass%, and the methanesulfonic acid + LiOH solution was added so that the amount of the lithium methanesulfonate added was as above.

<Example 9>

A test cell was produced and evaluated in the same manner as in Example 6 except that, in the third step in the production of the positive electrode active material, a methanesulfonic acid + LiOH solution in which methanesulfonic acid and LiOH were dissolved in pure water at a mole ratio of 1:1 was added instead of the lithium methanesulfonate solution, and the amount of the lithium methanesulfonate added relative to the total mass of the lithium-containing composite oxide was 0.5 mass%. A concentration of the methanesulfonic acid + LiOH solution added was 10 mass%, and the methanesulfonic acid + LiOH solution was added so that the amount of the lithium methanesulfonate added was as above.

Table 2 shows the initial charge-discharge efficiency and capacity retention of the test cells of Examples 6 to 9 and Comparative Example 3. The initial charge-discharge efficiency and capacity retention of the test cells of Examples 6 to 9 shown in Table 2 are represented relative to the initial charge-discharge efficiency and capacity retention of the test cell of Comparative Example 3 being 100, respectively.

[Table 2]

| | Positive electrode active material | | | | | | | | Evaluation results | |
|---|---|---|---|---|---|---|---|---|---|---|
| | Composition of lithium-co ntaining composite oxide | | | Amount of Ca/W added [mol%] | Sulfonate compound | | | | Initial charge-di scharge efficiency | Capacity retention |
| | Ni [mol%] | Co [mol%] | Mn [mol%] | | Added compound | Addition method | Addition amount [mass%] | | | |
| Example 6 | 90 | 5 | 5 | 0.25/0.5 | Li methanesulfonate | Solution addition | 0.5 | | 101.8 | 104.8 |
| Example 7 | 90 | 5 | 5 | 0.25/0.5 | Methanesulfonic acid | Solution addition | 0.48 | | 101.4 | 104.3 |
| Example 8 | 90 | 5 | 5 | 0.25/0.5 | Methanesulfonic acid + LiOH (Li/ Methanesulfonic acid =0.5 [mole ratio]) | Solution addition | 0.49 | | 101.5 | 104.5 |
| Example 9 | 90 | 5 | 5 | 0.25/0.5 | Methanesulfonic acid + LiOH (Li/ Methanesulfonic acid =1.0 [mole ratio]) | Solution addition | 0.5 | | 101.7 | 104.6 |
| Comparative Example 3 | 90 | 5 | 5 | - | - | - | - | | 100 | 100 |

In Table 2, the test cells of Examples 6 to 9 improved the initial charge-discharge efficiency and the capacity retention compared with the test cell of Comparative Example 3. It is found that, by adding any one of the sulfonate compound solution, the sulfonic acid solution, and the solution including the sulfonate compound and the Li compound to the cake-like composition, lithium methanesulfonate can be formed on the surface of the positive electrode active material, resulting in improved initial charge-discharge efficiency and capacity retention.

REFERENCE SIGNS LIST

10 non-aqueous electrolyte secondary battery, 11 positive electrode, 12 negative electrode, 13 separator, 14 electrode assembly, 15 battery case, 16 exterior housing can, 17 sealing assembly, 18, 19 insulating plate, 20 positive electrode tab, 21 negative electrode tab, 22 grooved portion, 23 bottom plate, 24 lower vent member, 25 insulating member, 26 upper vent member, 27 cap, 28 gasket, 30 positive electrode current collector, 31 positive electrode mixture layer, 40 negative electrode current collector, 41 negative electrode mixture layer

**Claims**

1. A positive electrode active material for a non-aqueous electrolyte secondary battery, including

   a lithium-containing composite oxide having a layered rock-salt structure and represented by the general formula $Li_xNi_aCo_bMn_cM1_dO_{2-y}$, wherein $0.95 \leq x \leq 1.05$, $0.75 \leq a \leq 0.95$, $0 \leq b \leq 0.15$, $0 \leq c \leq 0.25$, $0 \leq d \leq 0.10$, $0 \leq y < 0.05$, $a+b+c+d=1$, and M1 represents at least one element selected from the group consisting of W, Mg, Mo, Nb, Ti, Si, Al, and Zr, wherein
   the lithium-containing composite oxide includes secondary particles each formed by aggregation of primary particles, and
   on surfaces of the secondary particles or on interfaces between the primary particles, a sulfonate compound represented by the general formula I, at least one element selected from the group consisting of Ca and Sr, and at least one element selected from the group consisting of W, Mo, Ti, Si, Nb, and Zr, are present,

   [Formula 1]

   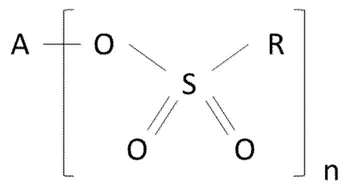

   (I)

   wherein A represents a group I element or a group II element, R represents a hydrocarbon group, and "n" represents 1 or 2.

2. The positive electrode active material for a non-aqueous electrolyte secondary battery according to claim 1, wherein a total amount of Ca and Sr on the surfaces of the secondary particles and on the interfaces between the primary particles is less than or equal to 2 mol% relative to a total amount of moles of metal elements in the lithium-containing composite oxide excluding Li.

3. The positive electrode active material for a non-aqueous electrolyte secondary battery according to claim 1 or 2, wherein a total amount of W, Mo, Ti, Si, Nb, and Zr on the surfaces of the secondary particles and on the interfaces between the primary particles is less than or equal to 2 mol% relative to the total amount of moles of metal elements in the lithium-containing composite oxide excluding Li.

4. The positive electrode active material for a non-aqueous electrolyte secondary battery according to any one of claims 1 to 3, wherein, on the surfaces of the secondary particles or on the interfaces between the primary particles, a compound represented by the general formula $M2_\alpha M3_\beta O_\gamma$, wherein $1 \leq \alpha \leq 2$, $1 \leq \beta \leq 5$, $4 \leq \gamma \leq 9$, M2 represents at least one element selected from the group consisting of Ca and Sr, and M3 represents at least one element selected from the group consisting of W, Mo, Ti, Si, Nb, and Zr, is stuck.

5. The positive electrode active material for a non-aqueous electrolyte secondary battery according to any one of claims

1 to 4, wherein the A represents a group I element.

6. The positive electrode active material for a non-aqueous electrolyte secondary battery according to any one of claims 1 to 4, wherein the A represents Li.

7. The positive electrode active material for a non-aqueous electrolyte secondary battery according to any one of claims 1 to 6, wherein the R represents an alkyl group.

8. The positive electrode active material for a non-aqueous electrolyte secondary battery according to any one of claims 1 to 6, wherein the R represents a methyl group.

9. The positive electrode active material for a non-aqueous electrolyte secondary battery according to any one of claims 1 to 8, wherein an amount of the sulfonate compound present on the surfaces of the secondary particles is greater than or equal to 0.1 mass% and less than or equal to 1 mass% relative to a mass of the lithium-containing composite oxide.

10. A non-aqueous electrolyte secondary battery, comprising:

a positive electrode including the positive electrode active material for a nonaqueous electrolyte secondary battery according to any one of claims 1 to 9;
a negative electrode; and
a non-aqueous electrolyte.

Figure 1

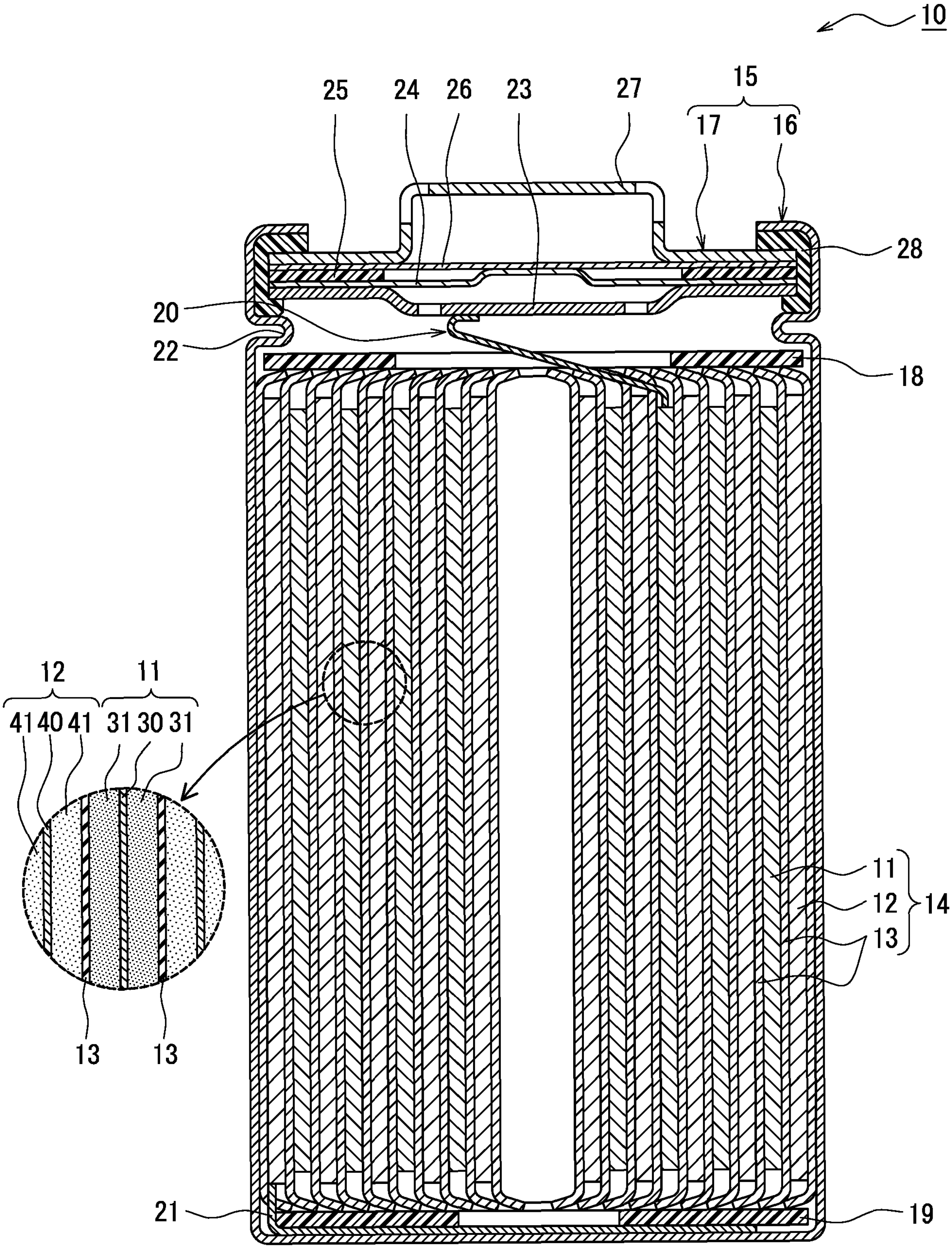
10
25
24
26
23
27
15
17
16
28
20
22
18
12
11
41 40 41
31 30 31
13
13
11
12
13
14
21
19

## INTERNATIONAL SEARCH REPORT

International application No.
**PCT/JP2023/000965**

### A. CLASSIFICATION OF SUBJECT MATTER

***H01M 4/525***(2010.01)i; ***H01M 4/36***(2006.01)i; ***H01M 4/505***(2010.01)i
FI: H01M4/525; H01M4/505; H01M4/36 C

According to International Patent Classification (IPC) or to both national classification and IPC

### B. FIELDS SEARCHED

Minimum documentation searched (classification system followed by classification symbols)

H01M4/525; H01M4/36; H01M4/505

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2015-037012 A (TOYOTA MOTOR CORP) 23 February 2015 (2015-02-23) | 1-10 |
| A | JP 2009-193780 A (SONY CORP) 27 August 2009 (2009-08-27) | 1-10 |
| A | JP 2018-129221 A (GS YUASA CORP) 16 August 2018 (2018-08-16) | 1-10 |

☐ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 March 2023** | **04 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/000965**

| Patent document cited in search report | Publication date (day/month/year) | Patent family member(s) | Publication date (day/month/year) |
|---|---|---|---|
| JP 2015-037012 A | 23 February 2015 | (Family: none) | |
| JP 2009-193780 A | 27 August 2009 | US 2012/0231335 A1<br>KR 10-2009-0087820 A<br>CN 101510605 A | |
| JP 2018-129221 A | 16 August 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018006164 A